# EUROPEAN PATENT SPECIFICATION

(11) **EP 1 293 269 B1**
(45) Date of publication and mention of the grant of the patent: **03.05.2006**
(21) Application number: 01936904.0
(22) Date of filing: 07.06.2001
(51) Int. Cl.: B21C 37/15, B21C 47/26, B21C 37/08, C21D 9/08

(54) **DEVICE AND METHOD FOR MANUFACTURING SOFT METAL TUBES**
VORRICHTUNG UND VERFAHREN ZUR HERSTELLUNG VON WEICHMETALLROHREN
DISPOSITIF ET PROCEDE DE FABRICATION DE TUBES DE METAL TENDRE

(30) Priority: 09.06.2000 JP 2000173522
(43) Date of publication of application: 19.03.2003
(73) Proprietor: DAIKIN INDUSTRIES, LTD., Osaka-shi, Osaka 530-8323 (JP)
(72) Inventor: OKAMOTO, Noriaki, c/o Kanaoka Factory, Sakai-shi, Osaka 591-8511 (JP); JOU, Hideki, c/o Kanaoka Factory, Sakai-shi, Osaka 591-8511 (JP); NAKAO, Noriaki, c/o Kanaoka Factory, Sakai-shi, Osaka 591-8511 (JP)
(74) Representative: Gossel, Hans K.
(86) International application number: PCT/JP2001/004828
(87) International publication number: WO 2001/094044

(56) References cited:
- JP-A- 9 029 333
- JP-A- 10 054 686
- JP-A- 62 188 727
- JP-U- 62 151 009
- US-A- 3 708 354
- PATENT ABSTRACTS OF JAPAN vol. 1997, no. 10, 31 October 1997 (1997-10-31) -& JP 09 155540 A (MITSUBISHI SHINDOH CO LTD), 17 June 1997 (1997-06-17)

## Description

### TECHNICAL FIELD

The present invention relates to a method and a device for manufacturing a soft metal tube in which a hardening work is applied in manufacturing a heat transfer tube with its inside surface having a groove for a heat exchanger or the like. More specifically, the present invention relates to a measure to prevent contacted portions of the metal tube that is coiled in line from sticking together. A method for manufacturing a soft metal tube is e.g. known from JP-A-09155540.

### BACKGROUND ART

For example, a heat transfer tube with its inside surface having a groove for a cross fin coil for an air conditioner shown in Japanese Patent Publication No. 61-32599 uses a soft copper plate as its material. As this soft copper plate, for example, a copper alloy plate that is defined by "O-material" of the alloy number "C1220" in "Chart 4 Mechanical Property" in the JIS (the Japanese Industrial Standards) H 3300 "Plate and Line of Cupper and Cupper Alloy " may be used.

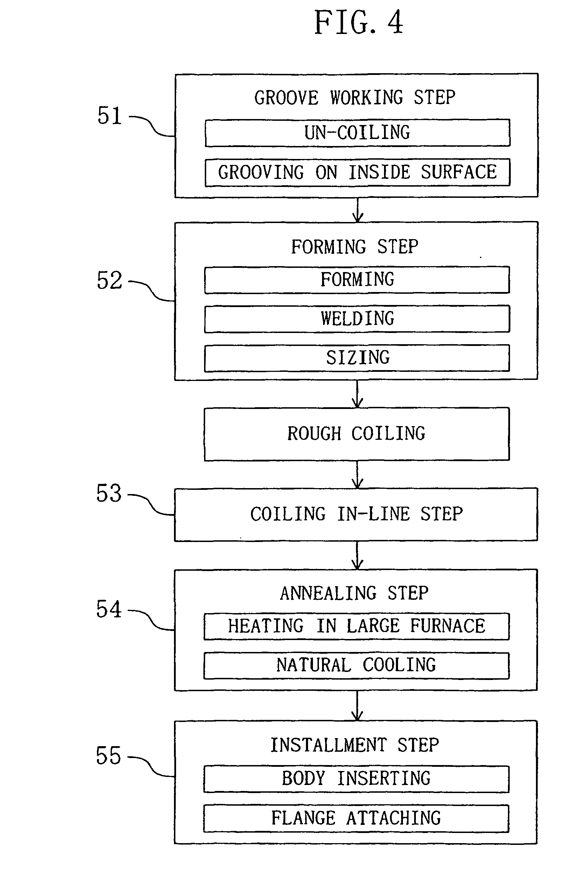

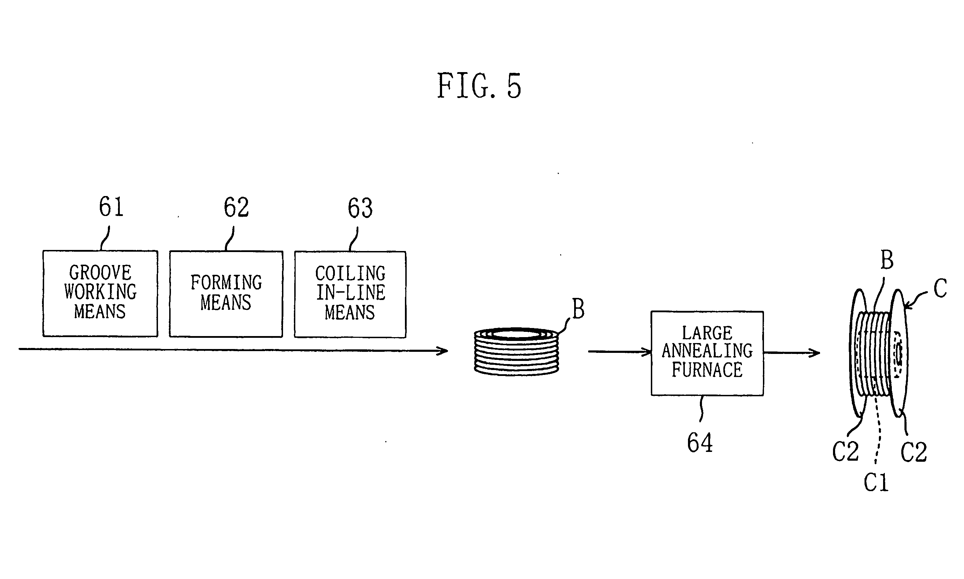

A process of manufacturing a heat transfer tube using the above-described soft copper plate will be described referring to FIGS. **4** and **5.** Firstly, groove working by rolling is applied to a copper plate by groove working means **(61)** in groove working step **(51).** Then, in forming step **(52),** it is formed in a tube shape by forming means **(62)** in such a manner that the groove is located on an inside surface of the tube. The copper tube **(B)** formed in this way is coiled regularly and in line by coiling in-line means **(63)** in coiling in-line step **(53),** and then it is installed to a bobbin for carrying out **(C)** in installment step **(55)** to be shipped subsequently.

Here, the copper plate is hardened to be H-material (as defined in the above-described Chart 4) by rolling in the groove working step (**51**). Accordingly, only this process would just provide a hardened copper tube (**B**). Specifically, Vickers Hardness HV(0.5) [ 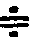 HV(4.9 N)] of the copper plate increases from 60 - 68 before working to 100 - 130 after working, Further, in the case of the heat transfer tube, its elongation percentage, one of important factors in forming the cross fin coil, decreases from 40 % before working to 35 % after working.

Accordingly, in a conventional process, the copper tube **(B)** is annealed and softened in annealing step **(54)** that follows the coiling in-line step **(53).**

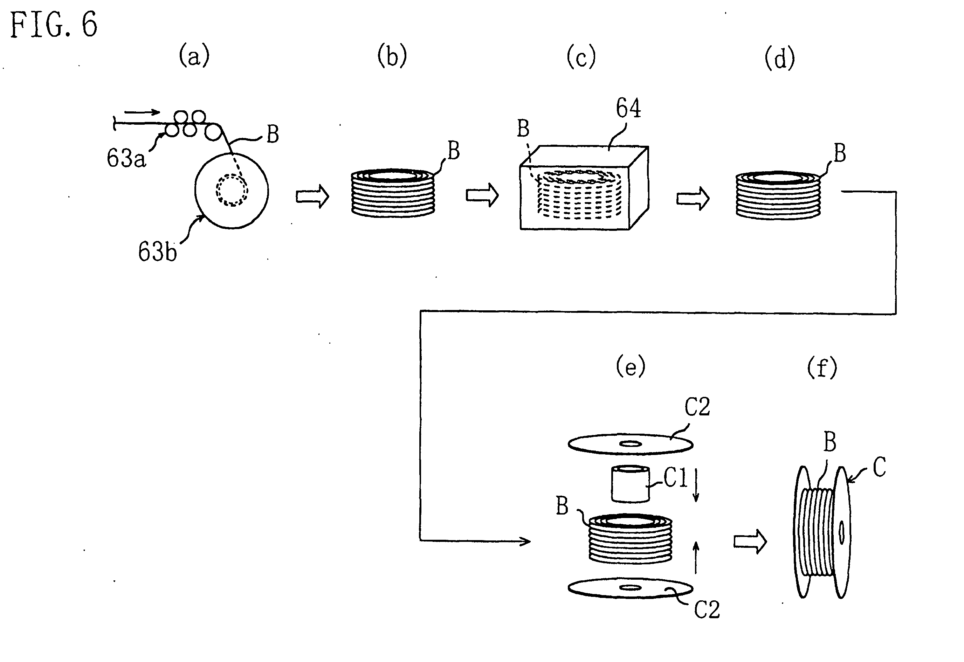

Now, a process from the coiling in-line step **(53)** through the annealing step **(54)** to the installment step **(55)** will be described in detail referring to FIG. **6.**

Firstly, in the coiling in-line step **(53),** as shown in FIG. **6(a),** the copper tube **(B)** is coiled regularly and in line by a coiling machine **(63b),** applying a bending tendency to the hardened copper tube **(B)** by a bending roll **(63a).** In this way, the copper tube **(B)** that is coiled in line can be provided as shown in FIG. **6(b).**

Next, this copper tube **(B)** that is coiled in line, as shown in FIG. **6(c),** is heated in an annealing furnace **(64),** a large anoxic furnace, and then it is removed out of the annealing furnace **(64)** and cooled naturally, as shown in FIG. **6(d).** In this way, the copper tube **(B)** that is coiled in line can be softened.

Then, as shown in FIG. **6(e),** a body **(C1)** of the bobbin for carrying out **(C)** is inserted in the center of the coils of the copper tube **(B),** and a pair of flanges **(C2, C2)** are attached to both ends of the body **(C1),** respectively. In this way, the copper tube **(B)** that is coiled in line can be installed to the bobbin **(C).**

Here, the reason the copper tube **(B)** is not annealed after it has been coiled in line to the bobbin **(C)** is to prevent the bobbin **(C)** from being heated. In this way, the soft copper tube **(B)** with its inside surface having a groove can be provided as shown in FIG. **6(f)**.

### - Problems to be solved -

Meanwhile, in the conventional manufacturing process described above, when the copper tube **(B),** which is coiled in line in the coiling in-line step **(53),** is heated in the annealing step **(54),** contacted portions of the copper tube **(B)** may stick together. Accordingly, there is a defect that it may not be easy for the copper tube **(B)** coiled on the bobbin **(C)** to be removed. Especially, a considerably high tension needs to be applied to the copper tube **(B)** when the copper tube **(B)** is coiled in line in the coiling in-line step **(53).** Accordingly, there may be some portions of the copper tube **(B)** where there exists a strong contact stress. Those portions may stick together very easily.

In view of the above-mentioned conventional problem, it is a major object of the present invention to prevent contacted portions of a soft metal tube from sticking together because of annealing applied for softening the metal tube, by applying an appropriate manufacturing method, when the soft metal tube, such as a heat transfer tube with its inside surface having a groove, is manufactured in which a hardening work is applied to the metal tube and it is coiled in line for its installment to an bobbin, resulting in an easy removal (un-coiling) of the metal tube from the bobbin.

### DISCLOSURE OF THE INVENTION

In order to achieve the above object, the present invention provides a method and a device for manufacturing a soft metal tube in which the metal tube is coiled in line after being annealed, contrary to a conventional way in which the metal tube is annealed after being coiled in line, so that contacted portions of the metal tube can be prevented from sticking together.

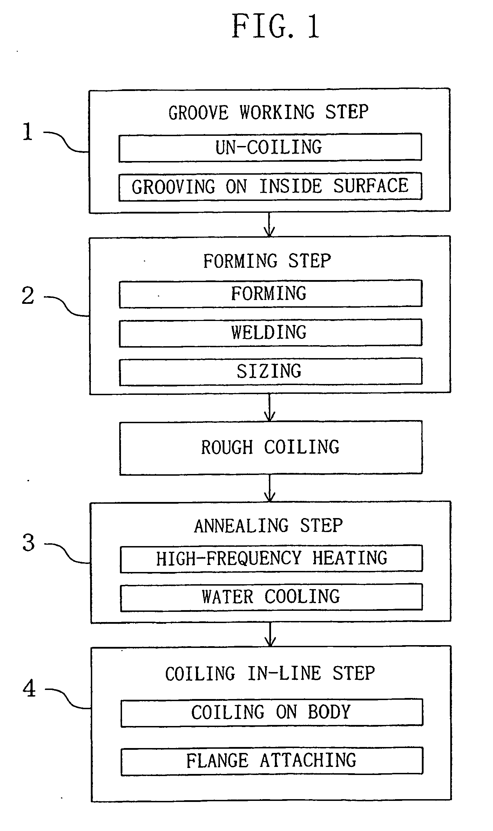

Specifically, the first aspect of the invention, as shown in FIG. **1**, provides a method for manufacturing a soft metal tube, comprising working step **(1)** of working a soft metal plate with hardening of the soft metal plate, forming step **(2)** of forming the metal plate worked in the working step **(1)** into a metal tube **(B),** annealing step **(3)** in line to anneal and soften the metal tube **(B)** that is hardened in the working step **(1)** and formed in the forming step **(2),** and coiling in-line step **(4)** of coiling the metal tube **(B)** softened in the annealing step **(3)** in line.

According to the first aspect of the invention, the soft metal plate is hardened by groove working in the working step **(1)** and then formed into the metal tube **(B)** in the forming step **(2).** It means that this would just provide only a hardened metal tube. However, the above metal tube **(B)** is firstly softened in the annealing step **(3)** and then coiled in line in the coiling in-line step **(4)**. That is, in the annealing step **(3),** the metal tube **(B)** has not been coiled in line yet. Accordingly, a situation can be avoided where contacted portions of the metal tube **(B)** stick together by annealing and thereby it may not be easy for the coiled tube to be removed.

Further, the second aspect of the invention provides the method of the first aspect of the invention, wherein the working step **(1)** comprises rolling to harden the metal plate.

According to the second aspect of the invention, the metal plate is actually hardened by rolling in the working step **(1),** because in general applying rolling to a soft metal plate hardens the metal plate. Therefore, the above-described function of the first aspect of the invention can be achieved actually.

Further, the third aspect of the invention provides the method of the first aspect or the second aspect of the invention, wherein the annealing step **(3)** comprises step of annealing every portions of the metal tube **(B)** one by one and continuously while the metal tube **(B)** is supplied in the length direction, and the coiling in-line step **(4)** comprises step of coiling the metal tube **(B)** in line successively while the metal tube **(B)** is carried out from the annealing step **(3).**

According to the third aspect of the invention, in the annealing step **(3),** every portions of the metal tube **(B)** is annealed one by one and continuously while supplied in the length direction. Meanwhile, in the coiling in-line step **(4),** the metal tube **(B)** is coiled in line successively while carried out from the annealing step **(3).** Accordingly, a smaller annealing furnace can be adopted, compared with that used in a conventional way where each coil of the metal tube coiled in line is annealed one by one. Further, in the annealing step **(3),** the annealing of the metal tube **(B)** is applied in the length direction continuously, and therefore a lower cost can be achieved, compared with a conventional way where applying of annealing is applied intermittently for each coil of the metal tube.

Further, the fourth aspect of invention provides the method of any of the first aspect through the third aspect of the invention, wherein the metal tube **(B)** is carried out in a state where it is coiled in line on a bobbin for carrying out **(C),** and the metal tube **(B)** is coiled in line on the bobbin for carrying out **(C)** in the coiling in-line step **(4).**

According to the fourth aspect of the invention, the metal tube **(B),** for example like a heat transfer tube for a heat exchanger, is carried out in a state where it is coiled in line on a bobbin for carrying out **(C),** and the metal tube **(B)** is coiled in line on the bobbin for carrying out **(C)** in the coiling in-line step **(4)** that is after the annealing step **(3).** That is, because the annealing step **(3)** is finished at this point, a situation where the bobbin for carrying out **(C)** is heated can be avoided. Therefore, any work of installing the metal tube that is coiled in line to the bobbin **(C),** which exists in a conventional way, can be omitted.

Further, the fifth aspect of the invention provides the method of the fourth aspect of the invention, wherein the bobbin for carrying out **(C)** comprises a body **(C1)** on which the metal tube **(B)** is coiled and a flange **(C2)** which is attached to at least one end of the body **(C1),** and the metal tube **(B)** is coiled in line on the body **(C1)** and then the flange **(C2)** is attached to the body **(C1)** with the metal tube **(B)** coiled in line thereon in the coiling in-line step **(4).**

According to the fifth aspect of the invention, in the coiling in-line step **(4),** the metal tube **(B)** is coiled in line on the body **(C1)** and then the flange **(C2)** is attached to the body **(C1).** Therefore, any work of inserting the body **(C1)** into the center of the coils of the metal tube **(B)** coiled in line, which exists in a conventional way, should not be necessary, and so it can provide simple works in the manufacturing method.

Further, the sixth aspect of the invention provides the method of any of the first aspect through the fifth aspect of the invention, wherein the metal tube **(B)** is a heat transfer tube with its inside surface having plural lines of grooves for a heat exchanger and the metal plate is a copper plate, the forming step **(1)** comprises step of forming plural lines of grooves on one surface of the copper plate by rolling, and the forming step **(2)** comprises step of forming the copper plate into the heat transfer tube **(B)** for the heat exchanger in such a manner that the grooves are located on an inside surface of the tube.

According to the sixth aspect of the invention, plural lines of grooves are formed on one surface of the soft copper plate by rolling in the working step **(1)**, and the copper plate is formed in a tube shape in such a manner that the grooves are located in an inside surface thereof in the forming step **(2),** and then the heat transfer tube with its inside surface having a groove **(B)** is provided. Therefore, the heat transfer tube with its inside surface having a groove **(B)** that should be easy to be removed without sticking because of annealing can be provided.

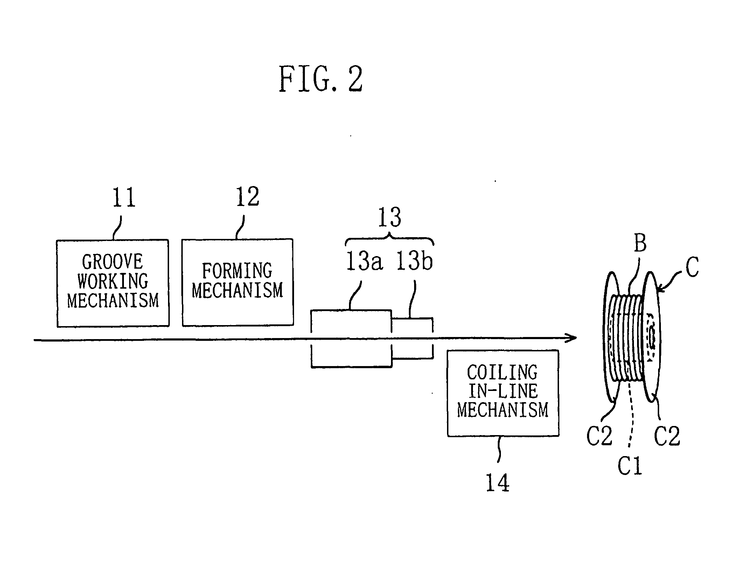

Further, the seventh aspect of the invention provides a manufacturing device that is used for the above-described method for manufacturing a soft metal tube of the first aspect of the invention, as shown in FIG. **2,** comprising, working means **(11)** for working a soft metal plate with hardening of the soft metal plate, forming means **(12)** for forming the metal plate worked in the working means **(11)** into a metal tube **(B),** annealing means **(13)** in line for annealing and softening the metal tube **(B)** that is hardened in the working means **(11)** and formed in the forming means **(12),** and coiling in-line means **(14)** for coiling the metal tube **(B)** softened in the annealing means **(13)** in line. According to this device for manufacturing a soft metal tube, basically the same function as the first aspect of the invention can be achieved.

Further, the eighth aspect of the invention provides the device of the seventh aspect of the invention, wherein the working means **(11)** is adapted to roll the metal plate accompanying hardening of this metal plate. According to the eighth aspect of the invention, basically the same function as the second aspect of the invention can be achieved.

Further, the ninth aspect of the invention provides the device of the seventh aspect or the eighth aspect of the invention, wherein the annealing means **(13)** comprises means for annealing every portions of the metal tube **(B)** one by one and continuously while the metal tube **(B)** is supplied in the length direction, and the coiling in-line means **(14)** comprises means for coiling the metal tube **(B)** in line successively while the metal tube **(B)** is carried out from the annealing means **(13).** According to the ninth aspect of the invention, basically the same function as the third aspect of the invention can be achieved.

Further, the tenth aspect of the invention provides the device of the ninth aspect of the invention, wherein the annealing means **(13)** comprises a heating furnace **(13a)**, through which the metal tube **(B)** can pass in the length direction, and a cooling furnace **(13b)** coupled to the heating furnace **(13a)** at its exit side, through which the metal tube **(B)** coming out from the heating furnace **(13a)** can pass in the length direction, and every portions of the metal tube **(B)** in the length direction passing through are heated in the heating furnace **(13a)** and then cooled in the cooling furnace **(13b),** one by one and continuously, respectively. According to the tenth aspect of the invention, the function of the ninth aspect of the invention can be achieved appropriately.

Further, the eleventh aspect of the invention provides the device of any of the seventh aspect through the tenth aspect of the invention, wherein, if the metal tube **(B)** is to be carried out in a state where it is coiled in line on a bobbin for carrying out **(C)**, the coiling in-line means **(14)** is adapted to coil the metal tube **(B)** in line on the bobbin for carrying out **(C).**

According to the eleventh aspect of the invention, the metal tube **(B)** that is annealed by the annealing means **(13)** is coiled in on the bobbin for carrying out **(C)** by the coiling in-line means **(14).** According to the eleventh aspect of the invention, basically the same function as the fourth aspect of the invention can be achieved.

Further, the twelfth aspect provides the device of any of the seventh aspect through the eleventh aspect of the invention, wherein, if the metal tube **(B)** is a heat transfer tube with its inside surface having plural lines of grooves for a heat exchanger and the metal plate is a copper plate, the working means **(11)** form is adapted to form plural lines of grooves on one surface of the copper plate by rolling, and the forming means **(12)** is adapted to form the copper plate into the heat transfer tube **(B)** for the heat exchanger in such a manner that the grooves are located on an inside surface of the tube. According to the twelfth aspect of the invention, basically the same function as the sixth aspect of the invention can be achieved.

### - Effects -

As described above, according to the first aspect and the seventh aspect of the invention, the soft metal plate is worked with hardening thereof and formed in a tube shape, and the metal tube **(B)** is coiled in line. Here, when the hardened metal tube **(B)** is softened by annealing, the metal tube is coiled in line after being annealed, contrary to a conventional way in which the metal tube is annealed after being coiled in line. Therefore, contacted portions of the metal tube **(B)** can be prevented from sticking together.

According to the second aspect and the eighth aspect of the invention, the work with hardening is the rolling. Therefore, the effect of the first aspect and the seventh aspect of the invention can be achieved actually.

According to the third aspect and the eighth aspect of the invention, the formed metal tube **(B)** is annealed continuously while supplied in its length direction, and thereby a smaller annealing furnace can be adopted. Therefore, space saving of equipments and cost reduction for installing and operating equipments can be achieved.

According to the fourth aspect and the ninth aspect of the invention, the metal tube **(B)** is carried out in a state where it is coiled in line on a bobbin for carrying out **(C),** and the metal tube **(B)** is coiled in line on the bobbin for carrying out **(C)** in the coiling in-line step **(4).** Therefore, it can reduce works for installing the metal tube **(B)** to the bobbin **(C).**

According to the fifth aspect of the invention, the metal tube **(B)** is coiled in line on the body of the bobbin **(C),** in which its flanges are attached to the end of its body. Therefore, any work of inserting the body into the center of the coils of the metal tube **(B)** coiled in line can be omitted. As a result, it can achieve the effect of the fourth aspect and the eleventh aspect of the invention actually.

According to the sixth aspect and the twelfth aspect of the invention, the metal tube **(B)** is the heat transfer tube with its inside surface having a groove for the heat exchanger, and this heat transfer tube for the heat exchanger is made from the copper plate. Therefore, the heat transfer tube with its inside surface having a groove that should be easy to be removed from the bobbin for carrying out **(C)** can be provided.

According to the tenth aspect of the invention, every portions of the metal tube **(B)** in its length direction are annealed one by one and continuously by the heating furnace **(13a)** and the cooling furnace **(13b),** through which the tube can pass respectively. Therefore, it can achieve the effect of the third aspect and the ninth aspect of the invention actually.

### BRIEF DESCRIPTION OF DRAWINGS

In the accompanying drawings:
FIG. **1** is a block diagram showing a process of manufacturing a heat transfer tube in an embodiment of the present invention;
FIG. **2** is a block diagram showing an entire constitution of a manufacturing device;
FIG. **3** is a schematic illustration showing respective steps in a manufacturing process from annealing step to coiling in-line step;
FIG. **4** is a diagram equivalent to the FIG. **1**, showing a conventional process of manufacturing a heat transfer tube;
FIG. **5** is a diagram equivalent to FIG. **2,** showing an entire constitution of a conventional manufacturing device; and
FIG. **6** is an illustration equivalent to FIG. **3,** showing respective steps in a conventional manufacturing process from annealing step through coiling in-line step to installment step.

### BEST MODE FOR CARRYING OUT THE INVENTION

Hereinafter, a preferred embodiment of the present invention will be described with reference to the accompanying drawings.

FIG. **2** shows schematically an entire constitution of a manufacturing device of a heat transfer tube in the embodiment of the present invention.

This device is used for manufacturing a heat exchanger from a ribbon-shaped soft copper plate of about 0.5 mm in thickness and about 30 mm in width (mentioned in Prior Art section). The manufacturing device is used for manufacturing a heat transfer tube **(B)** with its inside surface having a groove, having a thickness of several mm (for example, 7 - 8 mm).

The manufacturing device basically includes a groove working mechanism **(11)** that forms plural lines of grooves by applying rolling to the soft copper plate, a forming mechanism **(12)** that forms the copper plate worked by the groove working mechanism **(11)** into the heat transfer tube **(B),** an annealing mechanism **(13)** that anneals and softens the heat transfer tube **(B)** which is hardened by the groove working mechanism **(11)** and formed by the forming mechanism **(12),** and a coiling in-line mechanism **(14)** that coils the heat transfer tube **(B)** softened by the annealing mechanism **(13)** regularly and in line.

When supplied to the manufacturing device, the copper plate is supplied in a state where it is coiled on a bobbin for carrying in. On the other hand, the heat transfer tube **(B)** formed by the manufacturing device is carried out in a state where it is coiled regularly and in line on a wooden bobbin for carrying out **(C)** having a cylindrical body **(C1)** and a pair of flanges **(C2, C2)** detachably attached to the both ends of the body **(C1).**

The bobbin for carrying out **(C)** has its size in which an outside diameter of the body **(C1)** is approximately 600 mm, a distance between the both flanges **(C2, C2)** is approximately 400 mm, and a diameter of each flange **(C2)** is approximately 1100 mm.

Specifically, the groove working mechanism **(11)** is coupled to an un-coiler that removes the coiled copper plate on the bobbin carried in, which is not illustrated. The groove working mechanism **(11)** is constituted in such a manner that an emboss roll with a certain outer figure is pressed against the copper plate removed by the un-coiler so as to form the groove described above.

The forming mechanism **(12)** is constituted in such a manner that the copper plate is formed in a tube shape by pressing the copper plate against a forming roll mold, both-side edges thereof in the width direction are attached to one another and welded together by a welding machine, and then it is narrowed down to a certain diameter, which in not illustrated. In this way, the heat transfer tube **(B)** is formed by the forming mechanism **(12).**

The annealing mechanism **(13)** includes a high-frequency heating furnace **(13a),** through which the heat transfer tube **(B)** can pass in the length direction thereof, and a cooling furnace **(13b)** coupled to the high-frequency heating furnace **(13a)** at its exit side, through which the heat transfer tube **(B)** coming out from the high-frequency heating furnace **(13a)** can pass in the length direction thereof. The heat transfer tube **(B)** is supplied in the length direction so as to pass through the high-frequency heating furnace **(13a)** and cooling furnace **(13b)** in order, so that every portions of the heat transfer tube **(B)** is heated in the high-frequency heating furnace **(13a)** and then cooled in the cooling furnace **(13b),** one by one and continuously, respectively.

The coiling in-line mechanism **(14)** includes a rotational axis to which the body **(C1)** of the bobbin **(C)** is attached detachably, and a coiling machine **(14a)** rotating the body **(C1)** attached to the rotational axis in the coiling direction of the heat transfer tube **(B)** on the body **(C1)**. That is, in this embodiment, the heat transfer tube **(B)** is coiled in line directly on the bobbin for carrying out **(C).**

A process of manufacturing the heat transfer tube by the manufacturing device comprising the groove working mechanism **(11),** the forming mechanism **(12),** the annealing mechanism **(13)** and the coiling in-line mechanism **(14)** will be described referring to FIG. **1.**

Basically, the process consists of groove working step **(1)** by the groove working mechanism **(11),** forming step **(2)** by the forming mechanism **(12),** annealing step **(3)** by the annealing mechanism **(13)** and coiling in-line step **(4)** by the coiling in-line mechanism **(14).**

Specifically, in the groove working step **(1),** the copper plate carried in is removed from the bobbin by the un-coiler, and the emboss roll is pressed against one of the surfaces of the copper plate to work grooves. By this groove working, the soft copper plate is hardened from HV(0.5) 60 - 68 to HV(0.5) 100 - 130, and its elongation percentage decreases from more than 40 % to less than 35 %.

Then, in the forming step **(2),** the copper plate is formed in a tube shape gradually by pressing it against a roll mold, with grooves located on its inside surface, and its attached joint portions are welded together, and then it is narrowed down to a certain diameter. Here, in this embodiment, the heat transfer tube **(B)** formed in the forming step **(2)** is once coiled roughly with an appropriate diameter in a basket.

Next, in the annealing step **(3),** the heat transfer tube **(B)** in the basket is supplied in the length direction at a certain speed (for example approximately 10 - 200 m/minute), and every portions of that is heated at a certain temperature (for example 700 °C) in the high-frequency heating furnace **(13a)** and then cooled down by a water to a certain temperature (for example 30 - 40 °C) in the cooling furnace **(13b)**, one by one and continuously, respectively. Accordingly, the heat transfer tube **(B)** that has been hardened is softened and comes back to the original state with its elongation percentage of more than 40 %. Here, in this embodiment, a length of heating area where the heat transfer tube **(B)** is heated passing through the high-frequency heating furnace **(13a)** is set to approximately 1 m, and every portions of the heat transfer tube **(B)** in the length direction are heated at a certain temperature for a period of, for example 0.1 - 0.2 seconds.

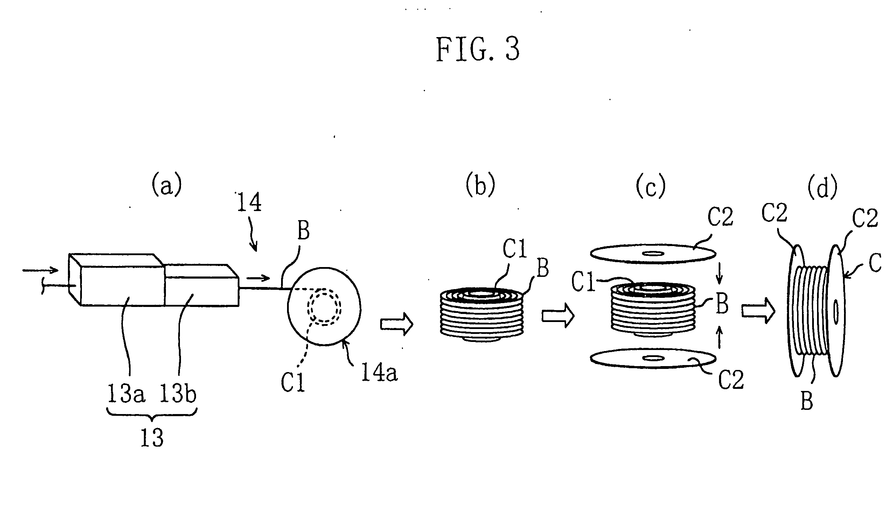

In the coiling in-line step **(4),** as shown in FIG. **3(a),** the heat transfer tube **(B)** annealed in the annealing step **(3)** is coiled directly on the body **(C1).** Accordingly, as shown in FIG. **3(b),** the heat transfer tube **(B)** that is coiled in line on the body **(C1)** can be provided. Next, as shown in FIG. **3(c),** a pair of flanges **(C2, C2)** are attached to the both ends of the body **(C1)** on which the heat transfer tube **(B)** is coiled in line, and accordingly the heat transfer tube **(B)** that is coiled in line on the bobbin for carrying out **(C)** can be provided. Here, in the coiling in-line step **(4)**, one flange **(C2)** may be attached to one end of the body **(C1)** at need.

Therefore, according to this embodiment, grooves are formed on the soft copper plate by rolling with hardening, and the copper plate is formed in a tube shape, and then the heat transfer tube **(B)** with its inside surface having groove is coiled in line. On the other hand, when the hardened heat transfer tube **(B)** is annealed and softened, the tube **(B)** is coiled in line after being annealed, contrary to the conventional way in which the tube is annealed and softened after being coiled in line. Therefore, a situation can be avoided where contacted portions of the heat transfer tube **(B)** stick together by annealing and accordingly it may not be easy for the coiled tube to be removed.

Further, the annealed heat transfer tube **(B)** is coiled in line on the body **(C1)** of the bobbin for carrying out **(C).** Therefore, works of installing the heat transfer tube **(B)** to the bobbin for carrying out **(C)** can be simplified so as to be just a work of installing the flange **(C2)** to the body **(C1).**

Here, in this embodiment, the heat transfer tube **(B)** with its inside surface having a groove for a heat exchanger is manufactured by using a soft metal plate made of copper alloy is described. However, the present invention is not limited to this particular material, and any other materials may be adopted.

### INDUSTRIAL APPLICABILITY

As described above, the method and the device for manufacturing a soft metal tube of the present invention are useful in manufacturing a soft metal tube which working with hardening is applied to and are coiled in line on, especially in manufacturing a soft metal tube with its inside surface having a groove for a heat exchanger.

## Claims

1. A method for manufacturing a soft metal tube, comprising:
working step **(1)** of working a soft metal plate with hardening of the soft metal plate;
forming step **(2)** of forming the metal plate worked in said working step **(1)** into a metal tube **(B);**
annealing step **(3)** in line of annealing and softening the metal tube **(B)** that is hardened in said working step **(1)** and formed in said forming step **(2);** and
coiling in-line step **(4)** of coiling the metal tube **(B)** softened in said annealing step **(3)** in line.

2. The method for manufacturing a soft metal tube of Claim **1,** wherein said working step **(1)** comprises rolling to harden the metal plate.

3. The method for manufacturing a soft metal tube of Claim **1,** wherein:
said annealing step **(3)** comprises step of annealing every portions of the metal tube **(B)** one by one and continuously while the metal tube **(B)** is supplied in the length direction; and
said coiling in-line step **(4)** comprises step of coiling the metal tube **(B)** in line successively while the metal tube **(B)** is carried out from said annealing step **(3).**

4. The method for manufacturing a soft metal tube of Claim **1,** wherein said metal tube **(B)** is carried out in a state where it is coiled in line on a bobbin for carrying out **(C),** and the metal tube **(B)** is coiled in line on the bobbin for carrying out **(C)** in said coiling in-line step **(4).**

5. The method for manufacturing a soft metal tube of Claim **4,** wherein said bobbin for carrying out **(C)** comprises a body **(C1)** on which the metal tube **(B)** is coiled and a flange **(C2)** which is attached to at least one end of the body **(C1),** and the metal tube **(B)** is coiled in line on the body **(C1)** and the flange **(C2)** is attached to the body **(C1)** with the metal tube **(B)** coiled in line in said coiling in-line step **(4).**

6. The method for manufacturing a soft metal tube of any of Claims **1 - 5,** wherein said metal tube **(B)** is a heat transfer tube with its inside surface having plural lines of grooves for a heat exchanger and said metal plate is a copper plate, said working step **(1)** comprises step of forming plural lines of grooves on one surface of the copper plate by rolling, and said forming step **(2)** comprises step of forming the copper plate into the heat transfer tube **(B)** for the heat exchanger in such a manner that the grooves are located on an inside surface of the tube.

7. A device for manufacturing a soft metal tube, comprising:
working means **(11)** for working a soft metal plate with hardening of the soft metal plate;
forming means **(12)** for forming the metal plate worked in said working means **(11)** into a metal tube **(B);**
annealing means **(13)** in line for annealing and softening the metal tube **(B)** that is hardened in said working means **(11)** and formed in said forming means **(12);** and
coiling in-line means **(14)** for coiling the metal tube **(B)** softened in said annealing means **(13)** in line.

8. The device for manufacturing a soft metal tube of Claim **7**, wherein said working means **(11)** is adapted to roll the metal plate accompanying hardening of the metal plate.

9. The device for manufacturing a soft metal tube of Claim **7**, wherein:
said annealing means **(13)** comprises means for annealing every portions of the metal tube **(B)** one by one and continuously while the metal tube **(B)** is supplied in the length direction; and
said coiling in-line means **(14)** comprises means for coiling the metal tube **(B)** in line successively while the metal tube **(B)** is carried out from said annealing means **(13).**

10. The device for manufacturing a soft metal tube of Claim **9,** wherein said annealing means **(13)** comprises a heating furnace **(13a),** through which the metal tube **(B)** can pass in the length direction, and a cooling furnace **(13b)** coupled to the heating furnace **(13a)** at its exit side, through which the metal tube **(B)** coming out from the heating furnace **(13a)** can pass in the length direction, and every portions of the metal tube **(B)** in the length direction passing through are heated in the heating furnace **(13a)** and then cooled in the cooling furnace **(13b),** one by one and continuously, respectively.

11. The device for manufacturing a soft metal tube of Claim **7,** wherein, if said metal tube **(B)** is to be carried out in a state where it is coiled in line on a bobbin for carrying out **(C),** said coiling in-line means **(14)** is adapted to coil the metal tube **(B)** in line on the bobbin for carrying out **(C).**

12. The device for manufacturing a soft metal tube of any of Claims **7 - 11**, wherein, if said metal tube **(B)** is a heat transfer tube with its inside surface having plural lines of grooves for a heat exchanger and said metal plate is a copper plate, said working means **(11)** is adapted to form plural lines of grooves on one surface of the copper plate by rolling, and said forming means **(12)** is adapted to form the copper plate into the heat transfer tube **(B)** for the heat exchanger in such a manner that the grooves are located on an inside surface of the tube.

## Patentansprüche

1. Verfahren zur Herstellung eines Weichmetallrohrs, das Folgendes umfasst:
einen Bearbeitungsschritt (1) zum Bearbeiten einer Weichmetallplatte unter Härten der Weichmetallplatte;
einen Formschritt (2) zum Formen der in dem Bearbeitungsschritt (1) bearbeiteten Metallplatte zu einem Metallrohr (B);
einen Inline-Glühschritt (3) zum Glühen und Erweichen des im Bearbeitungsschritt (1) gehärteten und im Formschritt (2) geformten Metallrohrs (B); und
einen Inline-Wickelschritt (4) zum Wickeln des im Inline-Glühschritt (3) erweichten Metallrohrs (B).

2. Verfahren zur Herstellung eines Weichmetallrohrs nach Anspruch 1, bei dem der Bearbeitungsschritt (1) Walzen zum Härten der Metallplatte umfasst.

3. Verfahren zur Herstellung eines Weichmetallrohrs nach Anspruch 1, bei dem
der Glühschritt (3) den Schritt des nacheinander und kontinuierlich erfolgenden Glühens jedes Abschnitts des Metallrohrs (B), während das Metallrohr (B) in Längsrichtung zugeführt wird, umfasst; und
der Inline-Wickelschritt (4) den Schritt des aufeinander folgenden Wickelns des Metallrohrs (B) inline, während das Metallrohr (B) von dem Glühschritt (3) abgeführt wird, umfasst.

4. Verfahren zur Herstellung eines Weichmetallrohrs nach Anspruch 1, bei dem das Metallrohr (B) in einen Zustand abgeführt wird, in dem es inline auf eine Abführrolle (C) gewickelt wird, und das Metallrohr (B) in dem Inline-Wickelschritt (4) inline auf die Abführrolle (C) gewickelt wird.

5. Verfahren zur Herstellung eines Weichmetallrohrs nach Anspruch 4, bei dem die Abführrolle (C) einen Körper (C1), auf den das Metallrohr (B) gewickelt wird, und einen Flansch (C2), der an mindestens einem Ende des Körpers (C1) befestigt ist, umfasst, und das Metallrohr (B) inline auf den Körper (C1) gewickelt und der Flansch (C2) an dem Körper (C1) befestigt wird, wobei das Metallrohr (B) in dem Inline-Wickelschritt (4) inline gewickelt wird.

6. Verfahren zur Herstellung eines Weichmetallrohrs nach einem der Ansprüche 1 - 5, bei dem das Metallrohr (B) ein Wärmeübertragungsrohr ist, dessen Innenfläche mehrere Nutenlinien für einen Wärmetauscher aufweist, und die Metallplatte eine Kupferplatte ist, wobei der Bearbeitungsschritt (1) den Schritt des Formens von mehreren Nutenlinien auf einer Fläche der Kupferplatte durch Walzen umfasst und der Formschritt (2) den Schritt des derartigen Formens der Kupferplatte zu dem Wärmetauscherrohr (B) für den Wärmetauscher, dass sich die Nuten auf einer Innenfläche des Rohrs befinden, umfasst.

7. Vorrichtung zur Herstellung eines Weichmetallrohrs, die Folgendes umfasst:
ein Bearbeitungsmittel (11) zum Bearbeiten einer Weichmetallplatte unter Härten der Weichmetallplatte;
ein Formmittel (12) zum Formen der in dem Bearbeitungsmittel (11) bearbeiteten Metallplatte zu einem Metallrohr (B);
ein Inline-Glühmittel (13) zum Glühen und Erweichen des in dem Bearbeitungsmittel (11) bearbeiteten und in dem Formmittel (12) geformten Metallrohrs (B); und
ein Inline-Wickelmittel (14) zum Wickeln des in dem Inline-Glühmittel (13) erweichten Metallrohrs (B).

8. Vorrichtung zur Herstellung eines Weichmetallrohrs nach Anspruch 7, bei dem das Bearbeitungsmittel (11) dazu ausgeführt ist, die Metallplatte unter Härten der Metallplatte zu walzen.

9. Vorrichtung zur Herstellung eines Weichmetallrohrs nach Anspruch 7, bei dem:
das Glühmittel (13) ein Mittel zum Glühen jedes Abschnitts des Metallrohrs (B) nacheinander und kontinuierlich, während das Metallrohr (B) in Längsrichtung zugeführt wird, umfasst; und
das Inline-Wickelmittel (14) ein Mittel zum Wickeln des Metallrohrs (B) inline und aufeinander folgend, während das Metallrohr (B) von dem Glühmittel (13) abgeführt wird, umfasst.

10. Vorrichtung zur Herstellung eines Weichmetallrohrs nach Anspruch 9, bei dem das Glühmittel (13) einen Heizofen (13a), durch den das Metallrohr (B) in Längsrichtung hindurchgeführt werden kann, und einen mit dem Heizofen (13a) an seiner Austrittsseite verbundenen Kühlofen (13b), durch den das aus dem Heizofen (13a) kommende Metallrohr (B) in Längsrichtung hindurchgeführt werden kann, umfasst, und jeder Abschnitt des in Längsrichtung hindurchgeführten Metallrohrs (B) nacheinander und kontinuierlich in dem Heizofen (13a) erwärmt und dann in dem Kühlofen (13b) gekühlt wird.

11. Vorrichtung zur Herstellung eines Weichmetallrohrs nach Anspruch 7, bei der, wenn das Metallrohr (B) in einem Zustand abgeführt werden soll, in dem es inline auf einer Abführrolle (C) aufgewickelt ist, das Inline-Wickelmittel (14) dazu ausgeführt ist, das Metallrohr (B) inline auf der Abführrolle (C) aufzuwickeln.

12. Vorrichtung zur Herstellung eines Weichmetallrohrs nach einem der Ansprüche 7 - 11, bei der, wenn das Metallrohr (B) ein Wärmeübertragungsrohr ist, dessen Innenfläche mehrere Nutenlinien für einen Wärmetauscher aufweist, und die Metallplatte eine Kupferplatte ist, das Bearbeitungsmittel (11) dazu ausgeführt ist, durch Walzen mehrere Nutenlinien auf einer Fläche der Kupferplatte zu bilden, und das Formmittel (12) dazu ausgeführt ist, die Kupferplatte zu dem Wärmeübertragungsrohr (B) für den Wärmetauscher so zu formen, dass sich die Nuten an einer Innenfläche des Rohrs befinden.

## Revendications

1. Procédé de fabrication d'un tube de métal tendre, comprenant :
l'étape d'usinage (1) consistant à usiner une plaque de métal tendre avec un durcissement de la plaque de métal tendre ;
l'étape de formage (2) consistant à former la plaque métallique usinée lors de ladite étape d'usinage (1) en un tube métallique (B) ;
l'étape de recuit (3) en ligne consistant à recuire et à adoucir le tube de métal (B) qui est durci lors de ladite étape d'usinage (1) et qui est formé lors de ladite étape de formage (2) ; et
l'étape d'enroulement en ligne (4) consistant à enrouler le tube métallique (B) adouci lors de ladite étape de recuit (3) en ligne.

2. Procédé de fabrication d'un tube de métal tendre selon la revendication 1, où l'étape d'usinage (1) comprend le laminage pour durcir la plaque métallique.

3. Procédé de fabrication d'un tube de métal tendre selon la revendication 1, dans lequel :
ladite étape de recuit (3) comprend l'étape consistant à recuire toutes les portions du tube de métal (B) une à une et continuellement pendant que le tube de métal (B) est amené dans la direction longitudinale ; et
ladite étape d'enroulement en ligne (4) comprend l'étape consistant à enrouler le tube de métal (B) en ligne successivement pendant que le tube de métal (B) sort de ladite étape de recuit (3).

4. Procédé de fabrication d'un tube de métal tendre selon la revendication 1, où ledit tube de métal (B) est exécuté dans un état où il est enroulé en ligne sur une bobine d'exécution (C), et le tube métallique (B) est enroulé en ligne sur la bobine d'exécution (C) lors de ladite étape d'enroulement en ligne (4).

5. Procédé de fabrication d'un tube de métal tendre selon la revendication 4, où ladite bobine d'exécution (C) comprend un corps (C1) sur lequel le tube de métal (B) est enroulé ainsi qu'une bride (C2) qui est fixée à au moins une extrémité du corps (C1), et le tube métallique (B) est enroulé en ligne sur le corps (C1), et la bride (C2) est fixée au corps (C1), le tube métallique (B) étant enroulé en ligne lors de ladite étape d'enroulement en ligne (4).

6. Procédé de fabrication d'un tube de métal tendre selon l'une des revendications 1 à 5, où ledit tube de métal (B) est un tube de transfert de chaleur présentant sur sa surface intérieure plusieurs lignes de rainures pour un échangeur de chaleur, et ladite plaque métallique est une plaque de cuivre, et ladite étape d'usinage (1) comprend l'étape consistant à former plusieurs lignes de rainures sur une surface de la plaque de cuivre par laminage, et ladite étape de formage (2) comprend l'étape consistant à amener la plaque de cuivre en une forme de tube de transfert de chaleur (B) pour l'échangeur de chaleur de telle manière que les rainures se situent sur une surface intérieure du tube.

7. Dispositif de fabrication d'un tube de métal tendre, comprenant :
un moyen d'usinage (11) pour usiner une plaque de métal tendre, avec durcissement de la plaque de métal tendre ;
un moyen de formage (12) pour former la plaque de métal usinée dans ledit moyen d'usinage (11) en un tube métallique (B) ;
un moyen de recuit (13) en ligne pour recuire et adoucir le tube de métal (B) qui est durci dans ledit moyen d'usinage (11) et formé dans ledit moyen de formage (12) ; et
un moyen d'enroulement en ligne (14) pour enrouler le tube métallique (B) adouci dans ledit moyen de recuit (13) en ligne.

8. Dispositif de fabrication d'un tube de métal tendre selon la revendication 7, où ledit moyen d'usinage (11) est conçu pour laminer la plaque métallique, accompagnant le durcissement de la plaque métallique.

9. Dispositif de fabrication d'un tube de métal tendre selon la revendication 7, dans lequel :
ledit moyen de recuit (13) comprend un moyen pour recuire toutes les portions du tube métallique (B) une à une et continuellement pendant que le tube métallique (B) est amené dans la direction longitudinale ; et
ledit moyen d'enroulement en ligne (14) comprend un moyen pour enrouler le tube métallique (B) en ligne successivement pendant que le tube métallique (B) sort dudit moyen de recuit (13).

10. Dispositif de fabrication d'un tube de métal tendre selon la revendication 9, où ledit moyen de recuit (13) comprend un four de chauffage (13a), à travers lequel le tube de métal (B) peut passer dans la direction longitudinale, et un four de refroidissement (13b) relié au four de chauffage (13a) à son côté sortie, à travers lequel le tube de métal (B) sortant du four de chauffage (13a) peut passer dans la direction longitudinale, et toutes les portions du tube métallique (B) dans la direction longitudinale passant à travers celui-ci sont chauffées dans le four de chauffage (13a) et sont ensuite refroidies dans le four de refroidissement (13b), une à une et continuellement, respectivement.

11. Dispositif de fabrication d'un tube de métal tendre selon la revendication 7, dans lequel, si ledit tube métallique (B) doit être exécuté dans un état où il est enroulé en ligne sur une bobine d'exécution (C), ledit moyen d'enroulement en ligne (14) est apte à enrouler le tube de métal (B) en ligne sur la bobine d'exécution (C).

12. Dispositif de fabrication d'un tube de métal tendre selon l'une des revendications 7 à 11, dans lequel, si ledit tube de métal (B) est un tube de transfert de chaleur présentant sur sa surface intérieure plusieurs lignes de rainures pour un échangeur de chaleur et que ladite plaque métallique est une plaque de cuivre, ledit moyen d'usinage (11) est apte à former plusieurs lignes de rainures sur une surface de la plaque de cuivre par laminage, et ledit moyen de formage (12) est apte à former la plaque de cuivre en tube de transfert de chaleur (B) pour l'échangeur de chaleur de telle manière que les rainures se situent sur une surface intérieure du tube.
